# FASCICULE DE BREVET EUROPEEN

(11) **EP 3 641 913 B1**
(45) Date de publication et mention de la délivrance du brevet: **07.04.2021**
(21) Numéro de dépôt: 18737008.5
(22) Date de dépôt: 18.06.2018
(51) Int. Cl.: B01D 53/00

(54) **DISPOSITIF ET PROCÉDÉ DE PURIFICATION CRYOGÉNIQUE ET ENGIN COMPRENANT UN DISPOSITIF DE PURIFICATION**
KRYOGENE REINIGUNGSVORRICHTUNG UND VERFAHREN UND MASCHINE MIT EINER REINIGUNGSVORRICHTUNG
CRYOGENIC PURIFICATION DEVICE AND METHOD AND MACHINE COMPRISING A PURIFICATION DEVICE

(30) Priorité: 21.06.2017 FR 1755648
(43) Date de publication de la demande: 29.04.2020
(73) Titulaire: L'AIR LIQUIDE, Société Anonyme pour l'Etude et l'Exploitation des Procédés Georges Claude, 75007 Paris (FR)
(72) Inventeur: BUTTERWORTH, James, 38600 Fontaine (FR); PENNEC, Yan, 38120 Saint Egreve (FR)
(74) Mandataire: Air Liquide
(86) Numéro de dépôt international: PCT/FR2018/051436
(87) Numéro de publication internationale: WO 2018/234668

(56) Documents cités:
- FR-A1- 3 000 541
- US-A- 3 093 470
- US-A- 4 337 071

## Description

L'invention concerne un dispositif et un procédé de purification cryogénique ainsi qu'un engin de locomotion comprenant un tel dispositif.

L'invention concerne plus particulièrement un dispositif de purification cryogénique d'un flux de gaz et notamment d'air, comprenant un circuit de purification comprenant une première entrée de gaz à purifier et un premier ensemble de filtres disposés en série en aval de la première entrée, le premier ensemble de filtres comprenant un échangeur de chaleur terminal en échange thermique avec une source froide cryogénique, le circuit de purification comprenant, en aval de l'échangeur terminal, une première sortie de gaz purifié, le dispositif comprenant au moins un organe moteur destiné à mettre en mouvement le flux de gaz dans le circuit de purification entre la première entrée et la première sortie.

La purification de l'air dans les véhicules aéronautiques, sous-marins ou spatiaux et même dans certains bâtiments est un enjeu primordial. Cette purification de l'air vise en particulier à retirer notamment les polluants suivants : eau, composés organiques volatiles et dioxyde de carbone.

Les technologies connues de purification d'air sont généralement complexes, ont une durée de vie limitée et nécessitent une maintenance relativement fréquente. De plus, en cas défaillance des substances toxiques peuvent être émises.

L'invention concerne une purification d'air par voie cryogénique.

Une solution connue pour les purifications d'air de bâtiments (hôpitaux...) est décrite dans le document US4337071.

Ce type de dispositif présente cependant des inconvénients parmi lesquels :
- un encrassage rapide qui nécessite un dimensionnement en conséquence,
- une consommation énergétique relativement importante,
- la génération d'un air purifié relativement sec qui nécessite une humidification,
- une structure complexe, lourde et coûteuse.

Un but de la présente invention est de pallier tout ou partie des inconvénients de l'art antérieur relevés ci-dessus.

A cette fin, le dispositif selon l'invention, par ailleurs conforme à la définition générique qu'en donne le préambule ci-dessus, est essentiellement caractérisé en ce que le circuit de purification comprend en outre, entre l'échangeur terminal et la première sortie, un second ensemble de filtre(s) et en ce que, le au moins un organe moteur est configuré pour mettre en mouvement deux volumes de gaz à purifier successifs selon des sens de circulations opposés dans le circuit, c'est-à-dire qu'un premier volume de gaz à purifier circule de la première entrée de gaz vers la première sortie puis un second volume de gaz à purifier pénètre dans le circuit via la première sortie de gaz et sort purifié via la première entrée.

Par ailleurs, des modes de réalisation de l'invention peuvent comporter l'une ou plusieurs des caractéristiques suivantes :
- les filtre(s) comprennent au moins l'un parmi : un filtre à poussière, un filtre à eau, un filtre à composés organiques volatiles, un filtre à dioxyde de carbone,
- les filtre(s) comprennent au moins l'un parmi : un filtre à poussière, un filtre à eau, un filtre à composés organiques volatiles, un filtre à dioxyde de carbone,
- l'un au moins des filtre(s) est un filtre du type régénératif c'est-à-dire un filtre piégeant un polluant et susceptible d'être régénéré et purgé des polluants piégés,
- l'un au moins des filtre(s) a une structure poreuse d'échangeur notamment une porosité comprise entre 50 et 99%,
- la structure poreuse d'échangeur est composée de l'un au moins parmi : un empilement de maillages, un textile, un feutre, de la laine, un aérogel, une masse obtenue par impression en trois dimensions,
- la structure poreuse d'échangeur est composée de l'un au moins des matériaux parmi : un métal ou alliage métallique, de l'acier inoxydable, du titanium, un plastique, un minéral,
- la structure poreuse d'échangeur a une capacité calorifique comprise entre 100 J.kg⁻¹.K⁻¹ et 2000 J.kg⁻¹.K⁻¹ et une conductivité thermique comprise entre 0,01 W.m⁻¹.K⁻¹ et 100 W.m⁻¹.K⁻¹
- l'un au moins de la première entrée et de la première sortie est relié à un collecteur de gaz, le collecteur de gaz étant relié à une arrivée de gaz et/ou une sortie de gaz,
- la source froide cryogénique comprend au moins l'un parmi : un refroidisseur cryogénique du type à fonctionnement Turbo-Brayton, Stirling, Tube à gaz pulsé, Gifford McMahon ou un cycle à réfrigérants mélangés,
- le au moins un organe moteur est du type réversible, c'est-à-dire permettant une inversion du flux de gaz,
- le au moins un organe moteur comprend au moins un ventilateur.

L'invention concerne également un procédé de purification d'un flux de gaz et notamment d'air au moyen d'un dispositif de purification conforme à l'une quelconque des caractéristiques ci-dessus ou ci-après, dans lequel un premier volume de gaz à purifier est mis en circulation la première entrée de gaz la première sortie au cours d'une première phase puis un second volume de gaz à purifier est mis en circulation en sens inverse dans le circuit au cours d'une seconde phase de façon à entrer via la première sortie de gaz et sortir purifié via la première entrée.

Selon d'autres particularités possibles :
- la première ou la seconde phase a une durée comprise entre 10 secondes et 30 minutes,
- le procédé comporte une étape de régénération du premier ensemble de filtres et/ou du second ensemble de filtre(s) du durant laquelle les filtres sont purgés d'au moins une partie des polluants pigés en leur sein,
- l'étape de régénération comprend un chauffage et/ou une mise sous vide du ou des filtres.

L'invention concerne également un engin de locomotion dans l'atmosphère ou l'espace extra-atmosphérique tel qu'un aéronef ou engin spatial comprenant un moteur, un volume de travail contenant un gaz respirable et un dispositif de purification du gaz respirable du volume de travail, dans lequel le dispositif de purification du gaz respirable est alimenté en gaz provenant du volume de travail pour le purifier et renvoyer le gaz purifié au sein du volume de travail, le dispositif de purification comprenant un circuit de purification du gaz comprenant un ensemble de filtres en série dont au moins un filtre cryogénique configuré pour refroidir le flux de gaz à une température comprise entre 90 K et 223K et notamment 120K.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue schématique et partielle illustrant la structure et le fonctionnement d'un dispositif de purification selon un exemple de réalisation de l'invention,
- la figure 2 représente une vue schématique et partielle illustrant la structure et le fonctionnement d'un engin mobile intégrant un dispositif de purification d'air.

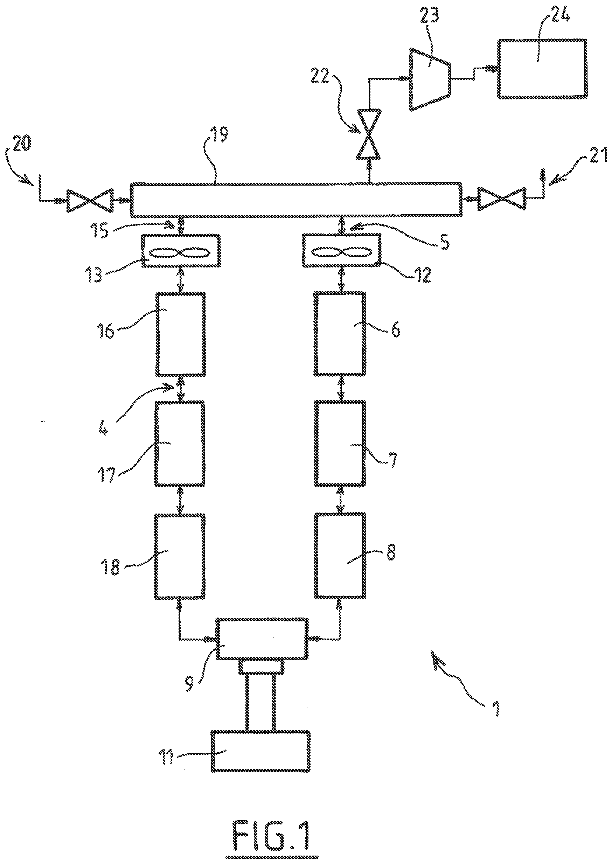

Le dispositif 1 de purification schématisé à la figure 1 comprenant un circuit 4 de purification d'un gaz (par exemple de l'air) comprenant une première entrée 5 de gaz à purifier et un premier ensemble de filtres 6, 7, 8, 9 disposés en série en aval de la première entrée 5 (quatre filtres dans cet exemple). Tout ou partie des filtres peuvent être des échangeurs de chaleur ou peuvent comprendre des échangeurs de chaleur.

Le quatrième filtre 9 est un échangeur de chaleur terminal de refroidissement en échange thermique avec une source froide 11 cryogénique telle qu'un cryo-refroidisseur.

Les échangeurs 6, 7, 8, 9 de purification refroidissent graduellement le flux de gaz à des températures décroissantes, la température la plus basse étant atteinte au niveau de l'échangeur 9 terminal en échange avec la source froide 11 cryogénique.

En aval de cet échangeur 9 terminal, le circuit 4 de purification comprend un second ensemble de filtre(s) 16, 17, 18 en série puis une première sortie 15 de gaz purifié.

Le dispositif 1 comprend au moins un organe 12, 13 moteur destiné à mettre en mouvement le flux de gaz dans le circuit 4 de purification entre la première entrée 5 et la première sortie 15.

Le au moins un organe 12, 13 moteur est configuré pour permettre de mettre en mouvement le gaz à purifier selon des sens de circulations opposés dans le circuit 4. C'est-à-dire qu'un premier volume de gaz à purifier peut être mis en circulation de la première entrée 5 de gaz la première sortie 15 puis un second volume de gaz à purifier pénètre dans le circuit 4 via la première sortie 15 de gaz et circuler en sens inverse pour sortir purifié via la première entrée 5.

Le premier volume de gaz à purifier pénètre ainsi à l'extrémité supérieure de la colonne de droit à la figure 1, puis pénètre à l'extrémité inférieure de la colonne de gauche de la figure 1 pour ressortir au niveau de l'extrémité supérieure de la colonne de gauche.

Le second volume à purifier emprunte le chemin inverse : il pénètre ainsi à l'extrémité supérieure de la colonne de gauche à la figure 1, puis pénètre à l'extrémité inférieure de la colonne de droite de la figure 1 pour ressortir au niveau de l'extrémité supérieure de la colonne de droite.

C'est-à-dire que la première sortie 15 peut devenir une « seconde entrée » et la première entrée 5 de gaz peut devenir « une seconde sortie ».

Le temps de cycle (purification d'un volume dans un sens de circulation) peut être compris pare exemple entre 10seconds et 10minutes (ou plus).

Dans l'exemple illustré, le au moins un organe moteur 12, 13 peut comprendre deux ventilateurs 12, 13 disposés respectivement au niveau des première entrée 5 et première sortie 15. Bien entendu, toute autre mode de réalisation approprié est possible. Par exemple, il est possible d'utiliser un ou plusieurs ventilateurs ou compresseurs dont les flux peuvent être inversés.

De préférence, la perte de charge dans le circuit 4 est inférieure à quelque dizaines de millibar pour limiter la consommation énergétique du ou des organes 12, 13 moteur(s).

De plus, comme représenté, la première entrée 5 et la première sortie 15 peuvent être reliées à un collecteur 19 de gaz.

Le collecteur 19 de gaz peut être relié à une arrivée 20 de gaz (de préférence via une vanne) et à une sortie 21 de gaz (de préférence via une vanne).

Le collecteur 19 a par exemple un volume compris entre 0,0001 et trois m³.

Comme décrit plus en détail ultérieurement, le collecteur 19 peut être également relié, de préférence via une vanne 22, à un système de régénération des filtres comprenant par exemple une pompe 23 et un système 24 de récupération de polluants.

Cette architecture permet de purifier un premier volume de gaz par sa mise en circulation de la première entrée 5 de gaz vers la première sortie 15.

En particulier, le gaz purgé et refroidi en sortie de l'échangeur 9 terminal passe et refroidit le second ensemble de filtres 18, 17, 16.

C'est-à-dire que, après avoir atteint cette température la plus basse, le flux de gaz purifié (débarrassé des contaminants) circule vers la première sortie 15 en refroidissant le second ensemble de filtre(s) 16, 17, 18 en série.

Ainsi, au cours d'une phase ultérieure de purification d'un autre volume de gaz, le gaz peut être admis en sens inverse dans le circuit 4 (entrée via la première sortie 15 de gaz et sortie purifié via la première entrée 5). De cette façon, cet autre volume de gaz à purifier relativement chaud est graduellement pré-refroidi en même temps dans les filtres du second ensemble 16, 17, 18 qui ont été refroidi lors de la purification précédente.

Comme illustré, dans l'exemple non limitatif, le dispositif 1 peut comprendre trois filtres 6, 7, 8 en série disposés entre la première entrée 5 et l'échangeur 9 de chaleur terminal refroidi par un cryo-refroidisseur 11. Les deux ensembles de filtre sont par exemples identiques et disposés symétriquement de part et d'autre de l'échangeur 9 terminal.

Un premier filtre 6 peut être un échangeur de refroidissement configuré pour retirer au moins une partie de l'eau du flux de gaz. De façon classique, l'eau y est piégée par condensation par exemple. Par exemple le flux de gaz y est refroidi à une température de l'ordre de 240K.

Le second filtre 7 peut être un échangeur configuré pour retirer tout ou partie des composés organiques volatiles. Par exemple le flux de gaz y est refroidi à une température de l'ordre de 150K.

Le troisième filtre 8 peut être un échangeur configuré pour retirer du dioxyde de carbone. Par exemple le flux de gaz y est refroidi et cristallisé à une température de l'ordre de 125K.

Ensuite, l'échangeur 9 de chaleur terminal refroidi par un cryo-refroidisseur 11 est configuré pour solidifier le dioxyde de carbone éventuellement restant par refroidissement en dessous de la température de solidification du CO2 (par exemple 120K). En effet, de préférence la cristallisation du dioxygène de carbone est réalisée majoritairement dans les filtres 8, 18 précédant l'échangeur 9 terminal.

Par exemple, la source 11 de froid comprend une machine de refroidissement cryogénique du type turbo-Brayton, Stirling, pulse tube ou Gifford-McMahon. Alternativement la source 11 de froid peut utiliser une technologie à cycles de réfrigération mélangés ou toute autre technologie appropriée pour maintenir une température de refroidissement requise pour piéger le polluant (par exemple 120K dans cet exemple).

Selon une variante possible il est possible de fournir de la chaleur entre les échangeurs 7 pour composés organique volatiles et les échangeur/filtres 6, 16 à eau pour assurer une évaporation d'eau et éviter une accumulation de glace.

De préférence les filtre(s) 6, 7, 8, 9, 16, 17, 18 sont du type régénératif c'est-à-dire susceptibles d'être régénérés et purgés des polluants piégés.

Par exemple, ces filtres 6, 7, 8, 9, 16, 17, 18 comportent une masse de matériau poreux destiné à accueillir le flux de gaz à purifier et configurée pour piéger au moins un polluant spécifique.

La masse poreuse peut être composée d'un empilement de mailles, feutre, textile, laine, une pièce obtenue par impression en trois dimensions, un aérogel, plastique, métal, alliage, Titanium, minéraux...

Le taux de porosité est avantageusement compris entre 50% et 99% en volume .

Par exemple, la matière poreuse a un diamètre de fibres compris entre 1 micronmètre et un millimètre.

De préférence, cette masse poreuse possède une capacité calorifique élevée (comprise entre 100 J.kg⁻¹.K⁻¹ et 2000 J.kg⁻¹.K⁻¹) et une conductivité thermique faible (comprise entre 0,01 W.m⁻¹.K⁻¹ et 100 W.m⁻¹.K⁻¹).

Les dimensions d'un tel échangeur cylindrique peuvent être de l'ordre de 5 à 50cm de diamètre et 30 à 100cm de longueur.

Ce type de structure poreuse est relativement simple, résiliente et peu coûteuse (comparativement à des échangeurs de chaleur classiques à plaques ou ailettes). De plus, de cette façon, le nombre de vannes cryogéniques peut être diminué.

Après une ou plusieurs phases de purification il peut être nécessaire de régénérer le ou les filtres 6, 7, 8, 9, 18 ,17, 16.

Eventuellement l'échangeur 9 terminal et/ou les échangeurs 7, 17 de piégeage des composés organiques volatiles peuvent être d'abord inertés (avec un gaz inerte) pour éviter la combustion/inflammation des composés organiques volatiles piégés.

Les arrivée et sortie 20, 21 de gaz sont fermées (vannes closes).

Puis la vanne 22 du système de régénération est ouverte et la pompe peut être mise en marche pour réaliser un vide ou une dépression dans le circuit (par exemple de l'ordre de 1 millibar) pour purger l'air restant.

Du fait que chacun des filtres 7, 17, 8, 18, 9, 19 est configuré pour un type de polluant, il est possible de purger les polluants respectifs (eau, composés organiques volatiles, CO2) en séquence.

Par exemple, un réchauffeur peut être prévu pour chauffer d'abord les échangeurs 8, 18 et 9 de piégeage du CO2 (en amont/aval de l'échangeur 9 le plus froid). Ces échangeurs 8, 18 sont par exemple chauffé par un réchauffeur (résistance ou autre) à une température de l'ordre par exemple de 160K. Le dioxyde de carbone est prélevé vers le système 24 de récupération.

Le dioxyde de carbone peut être traité par exemple dans un procédé de type Sabatier (pour dissociation d'Oxygène) ou peut être simplement évacué ou stocké. Lorsque tout le dioxyde de carbone a été sublimé, le réchauffeur (ou un autre réchauffeur) assure le réchauffage des filtres 7, 17 des composés organiques volatiles. Ces composés peuvent être purgés et/ou brûlés par exemple dans un catalyseur.

Ensuite, les filtres à eau 6, 16 peuvent être purgés.

A la fin de cette régénération, les échangeurs filtres 6, 16, 7, 17, 8, 18 peuvent être remis en températures adéquates (refroidis). Puis la vanne 22 du circuit de régénération peut être close et les vannes au niveau des arrivée 20 et sorties 21 peuvent être ré-ouvertes.

Cette régénération peut être réalisée pendant quelques dizaines de minutes à plusieurs heures. Sa durée peut être réduite via des réchauffeurs puissants.

Tout ou partie des étapes de purification et régénération peut être automatisé sous le contrôle d'un dispositif électronique (comprenant par exemple un microprocesseur ou équivalent).

Le dispositif peut être avantageusement utilisé dans un engin volant, notamment spatial comprenant un moteur 2, un volume 3 de travail contenant un gaz respirable.

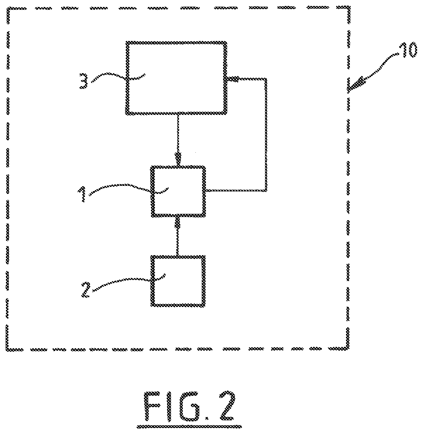

Comme schématisé à la figure 2, le dispositif 1 de purification du gaz respirable peut être alimenté en gaz provenant du volume 3 de travail pour le purifier et renvoyer le gaz purifié au sein du volume 3 de travail (cf. flèches).

## Revendications

1. Dispositif de purification cryogénique d'un flux de gaz et notamment d'air, comprenant un circuit (4) de purification comprenant une première entrée (5) de gaz à purifier et un premier ensemble de filtres (6, 7, 8, 9) disposés en série en aval de la première entrée (5), le premier ensemble de filtres comprenant un échangeur (9) de chaleur terminal en échange thermique avec une source froide (11) cryogénique, le circuit (4) de purification comprenant, en aval de l'échangeur (9) terminal, une première sortie (15) de gaz purifié, le dispositif (1) comprenant au moins un organe (12, 13) moteur destiné à mettre en mouvement le flux de gaz dans le circuit (4) de purification entre la première entrée (5) et la première sortie (15), **caractérisé en ce que** le circuit (4) de purification comprend en outre, entre l'échangeur (9) terminal et la première sortie (15), un second ensemble de filtre(s) (16, 17, 18) et **en ce que**, le au moins un organe (12, 13) moteur est configuré pour mettre en mouvement deux volumes de gaz à purifier successifs selon des sens de circulations opposés dans le circuit (4), c'est-à-dire qu'un premier volume de gaz à purifier circule de la première entrée (5) de gaz vers la première sortie (15) puis un second volume de gaz à purifier pénètre dans le circuit (4) via la première sortie (15) de gaz et sort purifié via la première entrée (5).

2. Dispositif selon la revendication 1, **caractérisé en ce que** les filtre(s) (6, 7, 8, 9, 16, 17, 18) comprennent au moins l'un parmi : un filtre à poussière, un filtre (6) à eau, un filtre (7) à composés organiques volatiles, un filtre (8) à dioxyde de carbone.

3. Dispositif selon la revendication 1 ou 2, **caractérisé en ce que** l'un au moins des filtre(s) (6, 7, 8, 9, 16, 17, 18) est un filtre de type cryogénique c'est-à-dire assurant un piégeage de polluant(s) par refroidissement du flux de gaz en dessous de la température de condensation ou de solidification des polluants.

4. Dispositif selon l'une quelconque des revendications 1 à 3, **caractérisé en ce que** l'un au moins des filtre(s) (6, 7, 8, 9, 16, 17, 18) est un filtre du type régénératif c'est-à-dire un filtre piégeant un polluant et susceptible d'être régénéré et purgé des polluants piégés.

5. Dispositif selon l'une quelconque des revendications 1 à 4, **caractérisé en ce que** l'un au moins des filtre(s) (6, 7, 8, 9, 16, 17, 18) a une structure poreuse d'échangeur notamment une porosité comprise entre 50 et 99%.

6. Dispositif selon la revendication 5, **caractérisé en ce que** la structure poreuse d'échangeur est composée de l'un au moins parmi : un empilement de maillages, un textile, un feutre, de la laine, un aérogel, une masse obtenue par impression en trois dimensions.

7. Dispositif selon la revendication 5 ou 6, **caractérisé en ce que** la structure poreuse d'échangeur est composée de l'un au moins des matériaux parmi : un métal ou alliage métallique, de l'acier inoxydable, du titanium, un plastique, un minéral.

8. Dispositif selon l'une quelconque des revendications 5 à 7, **caractérisé en ce que** la structure poreuse d'échangeur a une capacité calorifique comprise entre 100 J.kg⁻¹.K⁻¹ et 2000 J.kg⁻¹.K⁻¹ et une conductivité thermique comprise entre 0,01 W.m⁻¹.K⁻¹ et 100 W.m⁻¹.K⁻¹.

9. Dispositif selon l'une quelconque des revendications 1 à 8, **caractérisé en ce que** l'un au moins de la première entrée (5) et de la première sortie (15) est relié à un collecteur (19) de gaz, le collecteur (19) de gaz étant relié à une arrivée (20) de gaz et/ou une sortie (21) de gaz.

10. Dispositif selon l'une quelconque des revendications 1 à 9, **caractérisé en ce que** la source froide (11) cryogénique comprend au moins l'un parmi : un refroidisseur cryogénique du type à fonctionnement Turbo-Brayton, Stirling, Tube à gaz pulsé, Gifford McMahon ou un cycle à réfrigérants mélangés.

11. Procédé de purification d'un flux de gaz et notamment d'air au moyen d'un dispositif de purification conforme à l'une quelconque des revendications 1 à 10 dans lequel un premier volume de gaz à purifier est mis en circulation la première entrée (5) de gaz la première sortie (15) au cours d'une première phase puis un second volume de gaz à purifier est mis en circulation en sens inverse dans le circuit (4) au cours d'une seconde phase de façon à entrer via la première sortie (15) de gaz et sortir purifié via la première entrée (5).

12. Procédé selon la revendication 11, **caractérisé en ce que** la première ou la seconde phase a une durée comprise entre 10 secondes et 30 minutes.

13. Procédé selon l'une quelconque de revendications 11 à 12, **caractérisé en ce qu'**il comporte une étape de régénération du premier ensemble de filtres (6, 7, 8, 9) et/ou du second ensemble de filtre(s) (16, 17, 18) du durant laquelle les filtres sont purgés d'au moins une partie des polluants pigés en leur sein.

14. Procédé selon la revendication 13, **caractérisé en ce que** l'étape de régénération comprend un chauffage et/ou une mise sous vide du ou des filtres.

15. Engin de locomotion dans l'atmosphère ou l'espace extra-atmosphérique tel qu'un aéronef ou engin spatial comprenant un moteur (2), un volume (3) de travail contenant un gaz respirable et un dispositif (1) de purification du gaz respirable du volume (3) de travail, dans lequel le dispositif (1) de purification du gaz respirable est alimenté en gaz provenant du volume (3) de travail pour le purifier et renvoyer le gaz purifié au sein du volume (3) de travail, **caractérisé en ce que** le dispositif (1) de purification est conforme à l'une quelconque des revendications 1 à 10 et comprend un circuit de purification du gaz comprenant un ensemble de filtres en série dont au moins un filtre cryogénique configuré pour refroidir le flux de gaz à une température comprise entre 90 K et 223K et notamment 120K.

## Patentansprüche

1. Vorrichtung zur kryogenen Reinigung eines Gasstroms und insbesondere eines Luftstroms, die einen Reinigungskreislauf (4) umfasst, der einen ersten Einlass (5) für ein zu reinigendes Gas und eine erste Anordnung aus Filtern (6, 7, 8, 9) umfasst, die stromabwärts des ersten Einlasses (5) in Reihe angeordnet sind, wobei die erste Filteranordnung einen abschließenden Wärmetauscher (9) umfasst, der mit einer kryogenen Kältequelle (11) im Wärmeaustausch steht, wobei der Reinigungskreislauf (4) stromabwärts des abschließenden Wärmetauschers (9) einen ersten Auslass (15) für gereinigtes Gas umfasst, wobei die Vorrichtung (1) mindestens ein Antriebsorgan (12, 13) umfasst, mit dem der Gasstrom in dem Reinigungskreislauf (4) zwischen dem ersten Einlass (5) und dem ersten Auslass (15) in Bewegung versetzt werden soll, **dadurch gekennzeichnet, dass** der Reinigungskreislauf (4) ferner zwischen dem abschließenden Wärmetauscher (9) und dem ersten Auslass (15) eine zweite Anordnung aus (einem) Filter (n) (16, 17, 18) umfasst, und dadurch, dass das mindestens eine Antriebsorgan (12, 13) so eingerichtet ist, dass es zwei aufeinanderfolgende zu reinigende Gasvolumina in entgegengesetzter Strömungsrichtung im Kreislauf (4) in Bewegung versetzt, also ein erstes zu reinigendes Gasvolumen vom ersten Einlass (5) für Gas in Richtung des ersten Auslasses (15) strömt und dann ein zweites zu reinigendes Gasvolumen über den ersten Auslass (15) für Gas in den Kreislauf (4) strömt und gereinigt über den ersten Einlass (5) ausströmt.

2. Vorrichtung nach Anspruch 1, **dadurch gekennzeichnet, dass** der bzw. die Filter (6, 7, 8, 9, 16, 17, 18) mindestens einen von Folgendem umfassen: einen Staubfilter, einen Wasserfilter (6), einen Filter (7) für flüchtige organische Verbindungen, einen Kohlendioxidfilter (8).

3. Vorrichtung nach Anspruch 1 oder 2, **dadurch gekennzeichnet, dass** mindestens einer von dem bzw. den Filter(n) (6, 7, 8, 9, 16, 17, 18) ein kryogener Filter ist, der also dafür sorgt, dass ein Schadstoff bzw. Schadstoffe durch Abkühlen des Gasstroms auf eine Temperatur unter der Kondensations- oder Verfestigungstemperatur der Schadstoffe eingefangen wird bzw. werden.

4. Vorrichtung nach einem der Ansprüche 1 bis 3, **dadurch gekennzeichnet, dass** mindestens einer von dem bzw. den Filter(n) (6, 7, 8, 9, 16, 17, 18) ein regenerativer Filter ist, also ein Filter, der einen Schadstoff einfängt und regeneriert werden kann und von den eingefangenen Schadstoffen gereinigt werden kann.

5. Vorrichtung nach einem der Ansprüche 1 bis 4, **dadurch gekennzeichnet, dass** mindestens einer von dem bzw. den Filter (n) (6, 7, 8, 9, 16, 17, 18) eine poröse Austauscherstruktur und insbesondere eine Porosität zwischen 50 und 99% aufweist.

6. Vorrichtung nach Anspruch 5, **dadurch gekennzeichnet, dass** die poröse Austauscherstruktur aus mindestens einem von Folgendem aufgebaut ist: übereinandergelegte Netzstrukturen, ein textiles Flächengebilde, ein Filz, Wolle, ein Aerogel, eine durch dreidimensionalen Druck erhaltene Masse.

7. Vorrichtung nach Anspruch 5 oder 6, **dadurch gekennzeichnet, dass** die poröse Austauscherstruktur aus mindestens einem von folgenden Materialien aufgebaut ist: ein Metall oder eine Metalllegierung, rostfreier Stahl, Titan, ein Kunststoff, ein Mineral.

8. Vorrichtung nach einem der Ansprüche 5 bis 7, **dadurch gekennzeichnet, dass** die poröse Austauscherstruktur eine spezifische Wärmekapazität zwischen 100 J·kg⁻¹·K⁻¹ und 2000 J·kg⁻¹·K⁻¹ und eine Wärmeleitfähigkeit zwischen 0, 01 W·m⁻¹·K⁻¹ und 100 W·m⁻¹·K⁻¹ aufweist.

9. Vorrichtung nach einem der Ansprüche 1 bis 8, **dadurch gekennzeichnet, dass** der erste Einlass (5) und/oder der erste Auslass (15) mit einer Gassammeleinrichtung (19) verbunden ist, wobei die Gassammeleinrichtung (19) mit einer Gaszufuhr (20) und/oder einem Gasauslass (21) verbunden ist.

10. Vorrichtung nach einem der Ansprüche 1 bis 9, **dadurch gekennzeichnet, dass** die kryogene Kältequelle (11) mindestens eins aus Folgendem umfasst: einem kryogenen Turbo-Brayton-Kühler, Stirlingkühler, Pulsröhrenkühler, Gifford-McMahon-Kühler oder einem Kreislauf mit Kühlmittelgemisch.

11. Verfahren zur Reinigung eines Gasstroms und insbesondere eines Luftstroms mit einer Reinigungsvorrichtung nach einem der Ansprüche 1 bis 10, wobei ein erstes zu reinigendes Gasvolumen während einer ersten Phase der erste Einlass (5) für Gas der erste Auslass (15) geführt wird und dann ein zweites zu reinigendes Gasvolumen im Kreislauf (4) während einer zweiten Phase derart in der Gegenrichtung geführt wird, dass es über den ersten Auslass (15) für Gas einströmt und gereinigt über den ersten Einlass (5) ausströmt.

12. Verfahren nach Anspruch 11, **dadurch gekennzeichnet, dass** die erste oder zweite Phase zwischen 10 Sekunden und 30 Minuten dauert.

13. Verfahren nach Anspruch 11 oder 12, **dadurch gekennzeichnet, dass** es einen Schritt zur Regeneration der ersten Anordnung aus Filtern (6, 7, 8, 9) und/oder der zweiten Anordnung aus (einem) Filter(n) (16, 17, 18) umfasst, während dem zumindest ein Teil der darin gefangenen Schadstoffe aus den Filtern ausgespült wird.

14. Verfahren nach Anspruch 13, **dadurch gekennzeichnet, dass** der Regenerationsschritt eine Erwärmung und/oder Evakuierung des Filters oder der Filter umfasst.

15. Maschine zur Fortbewegung in der Atmosphäre oder im außeratmosphärischen Raum, beispielsweise ein Flugzeug oder Raumfahrzeug, die einen Motor (2), ein Arbeitsvolumen (3), das ein atembares Gas enthält, und eine Vorrichtung (1) zur Reinigung des atembaren Gases des Arbeitsvolumens (3) umfasst, wobei der Vorrichtung (1) zur Reinigung des atembaren Gases Gas zugeführt wird, das aus dem Arbeitsvolumen (3) stammt, damit es gereinigt und das gereinigte Gas wieder in das Arbeitsvolumen (3) geleitet wird, **dadurch gekennzeichnet, dass** die Reinigungsvorrichtung (1) einem der Ansprüche 1 bis 10 entspricht und einen Gasreinigungskreislauf umfasst, der eine Anordnung aus Filtern in Reihe umfasst, wovon mindestens einer ein kryogener Filter ist, der so eingerichtet ist, dass er den Gasstrom auf eine Temperatur zwischen 90 K und 223 K und insbesondere 120 K abkühlt.

## Claims

1. Device for the cryogenic purification of a stream of gas and in particular of air, comprising a purification circuit (4) comprising a first inlet (5) of gas to be purified and a first set of filters (6, 7, 8, 9) arranged in series downstream of the first inlet (5), the first set of filters comprising an end heat exchanger (9) operating to exchange heat with a cryogenic cold source (11), the purification circuit (4) comprising, downstream of the end exchanger (9), a first outlet (15) of purified gas, the device (1) comprising at least one drive member (12, 13) intended to set the gas stream in motion in the purification circuit (4) between the first inlet (5) and the first outlet (15), **characterized in that** the purification circuit (4) additionally comprises, between the end exchanger (9) and the first outlet (15), a second set of filter(s) (16, 17, 18), and **in that** the at least one drive member (12, 13) is configured to set two successive volumes of gas to be purified in motion in opposite directions of circulation in the circuit (4), that is to say that a first volume of gas to be purified circulates from the first gas inlet (5) to the first outlet (15) and then a second volume of gas to be purified enters the circuit (4) via the first gas outlet (15) and exits purified via the first inlet (5).

2. Device according to Claim 1, **characterized in that** the filter(s) (6, 7, 8, 9, 16, 17, 18) comprise at least one among: a dust filter, a water filter (6), a volatile organic compound filter (7), a carbon dioxide filter (8).

3. Device according to Claim 1 or 2, **characterized in that** at least one of the filter(s) (6, 7, 8, 9, 16, 17, 18) is a cryogenic-type filter, that is to say ensuring trapping of pollutant(s) by cooling the gas stream below the condensation or solidification temperature of the pollutants.

4. Device according to any one of Claims 1 to 3, **characterized in that** at least one of the filter(s) (6, 7, 8, 9, 16, 17, 18) is a filter of the regenerative type, that is to say a filter which traps a pollutant and can be regenerated and purged of trapped pollutants.

5. Device according to any one of Claims 1 to 4, **characterized in that** at least one of the filter(s) (6, 7, 8, 9, 16, 17, 18) has a porous exchanger structure, in particular a porosity between 50 and 99%.

6. Device according to Claim 5, **characterized in that** the porous exchanger structure is composed of at least one among: a stack of meshes, a textile, a felt, wool, an aerogel, a mass obtained by three-dimensional printing.

7. Device according to Claim 5 or 6, **characterized in that** the porous exchanger structure is composed of at least one among: a metal or metal alloy, stainless steel, titanium, a plastic, a mineral.

8. Device according to any one of Claims 5 to 7, **characterized in that** the porous exchanger structure has a heat capacity of between 100 J.kg⁻¹.K⁻¹ and 2000 J.kg⁻¹. K⁻¹ and a thermal conductivity of between 0.01 W.m⁻¹.K⁻¹ and 100 W.m⁻¹.K⁻¹.

9. Device according to any one of Claims 1 to 8, **characterized in that** at least one of the first inlet (5) and the first outlet (15) is connected to a gas collector (19), the gas collector (19) being connected to a gas inlet (20) and/or a gas outlet (21).

10. Device according to any one of Claims 1 to 9, **characterized in that** the cryogenic cold source (11) comprises at least one among: a cryogenic cooler of the Turbo-Brayton, Stirling, pulse gas tube, Gifford McMahon operating type or a mixed-refrigerant cycle.

11. Process for purifying a stream of gas and in particular of air by means of a purification device in accordance with any one of Claims 1 to 10, wherein a first volume of gas to be purified is circulated the first gas inlet (5) the first outlet (15) during a first phase, then a second volume of gas to be purified is circulated in the opposite direction in the circuit (4) during a second phase so as to enter via the first gas outlet (15) and to exit via the first inlet (5).

12. Process according to Claim 11, **characterized in that** the first or the second phase has a duration of between 10 seconds and 30 minutes.

13. Process according to either one of Claims 11 and 12, **characterized in that** it comprises a step of regeneration of the first set of filters (6, 7, 8, 9) and/or the second set of filter(s) (16, 17, 18) during which the filters are purged of at least one portion of the pollutants trapped therein.

14. Process according to Claim 13, **characterized in that** the regeneration step comprises heating the filter(s) and/or generating a vacuum therein.

15. Machine for locomotion in the atmosphere or outer space such as an aircraft or spacecraft comprising an engine (2), a working volume (3) containing a breathable gas and a device (1) for purifying the breathable gas of the working volume (3), wherein the device (1) for purifying the breathable gas is supplied with gas from the working volume (3) in order to purify it and to return the purified gas into the working volume (3), **characterized in that** the purification device (1) is in accordance with any one of Claims 1 to 10 and comprises a gas purification circuit comprising a set of filters in series including at least one cryogenic filter configured to cool the gas stream to a temperature between 90K and 223K and in particular 120K.
